Europäisches Patentamt

European Patent Office

Office européen des brevets

(11) Veröffentlichungsnummer: **0 234 264 B1**

(12) # EUROPÄISCHE PATENTSCHRIFT

(45) Veröffentlichungstag der Patentschrift: **24.04.91**

(51) Int. Cl.⁵: **H02P 8/00**

(21) Anmeldenummer: **87100749.8**

(22) Anmeldetag: **20.01.87**

(54) Schaltungsanordnung zum Steuern eines elektrischen Schrittmotors.

(30) Priorität: **23.01.86 DE 3601966**

(43) Veröffentlichungstag der Anmeldung:
**02.09.87 Patentblatt 87/36**

(45) Bekanntmachung des Hinweises auf die
Patenterteilung:
**24.04.91 Patentblatt 91/17**

(84) Benannte Vertragsstaaten:
**CH DE ES FR GB IT LI NL SE**

(56) Entgegenhaltungen:
**EP-A- 0 066 159**
**DE-A- 3 429 955**

**IBM TECHNICAL DISCLOSURE BULLETIN,
Band 27, Nr. 10b, März 1985, Seite 6338, New
York, US; "Adaptable open-loop step motor
control"**

(73) Patentinhaber: **Siemens Aktiengesellschaft
Wittelsbacherplatz 2
W-8000 München 2(DE)**

(72) Erfinder: **Schierjott, Rudolf, Dipl-Ing. (FH)
Edlingerplatz 4
W-8000 München 90(DE)**
Erfinder: **Schumann, Werner, Dipl.-Ing. (FH)
Würmseestrasse 56
W-8000 München 71(DE)**

## Beschreibung

Die Erfindung betrifft eine Schaltungsanordnung gemäß dem Oberbegriff des Patentanspruches 1.

In der Steuerungs- und Regelungstechnik werden elektrische Schrittmotoren als Antriebselemente für die verschiedensten Antriebs- und Positionieraufgaben eingesetzt. Elektrische Schrittmotore sind physikalisch gesehen Umformer, die eine elektrische Eingangsgröße in eine mechanische Ausgangsgröße umwandeln. Der Schrittmotor besitzt entsprechend seiner Konstruktion einen Rotor, der pro Eingangsspannungsimpuls um einen genau definierten Winkel schrittweise verdreht wird. Dieser Winkel wird i.A. als Schrittwinkel bezeichnet und ist durch den konstruktiven Aufbau des Schrittmotors festgelegt. Bei einem Schrittmotor handelt es sich also um ein diskretes Stellglied, das quantisierte Drehbewegungen ausführen kann.

Aufbau und Arbeitsweise von Schrittmotoren, sowie deren Ansteuerungsarten sind hinlänglich bekannt und z.B. aus der Druckschrift "Schrittmotoren-Aufbau, Funktionsweise und Anwendung", Ausgabe Februar 1980 der Firma Berger-Lahr entnehmbar.

Das charakteristische Verhalten von Schrittmotoren, nämlich das schrittweise Drehen der Motorwelle pro Eingangsspannungsimpuls um einen genau definierten, vom Motoraufbau abhängigen Winkel erlaubt eine ideale Lösung der in modernen Büromaschinen wie elektronisch gesteuerten Schreibmaschinen und Datendruckern auszuführenden Bewegungsabläufe.

So wird bei Druckeinrichtungen in elektronisch gesteuerten Geräten der Büro- und Datentechnik die Schreibwalze mit Hilfe eines Schrittmotors angetrieben. Dieser, als Zeilenmotor bezeichnete Schrittmotor dreht die das zu bedruckende Papier tragende Schreibwalze um einen bestimmten, den gewählten Zeilenabstand entsprechenden Winkel. Die Zeilenvorschubgeschwindigkeit, also die Geschwindigkeit mit der der Schrittmotor die Schreibwalze um eine Zeile weiter schaltet, ist abhängig von der Steuerfrequenz des Schrittmotors. Liegt der Schrittmotor an einer in seiner Amplitude schwankenden betriebsspannung, so ist es üblich, den Zeilenmotor mit einer Festfrequenz anzusteuern, die dem kleinsten Wert der Betriebsspannung zuzuordnen ist. Dadurch wird verhindert, daß der Zeilenmotor auch beim kleinsten Wert der Betriebsspannung außer Tritt fällt. Die Zeilenvorschutigeschwindigkeit wird dabei auf ein, durch die Festfrequenz bestimmtes Maß begrenzt.

Aus der Literaturstelle IBM - Technical Disclosure Bulletin, Vol. 27 No. 10B, March 1985, ist eine Schaltungsanordnung für einen an einer veränderlichen Versorgungsspannung liegenden Schrittmotor bekannt. Diese Schaltungsanordnung weist im wesentlichen eine Steuerungseinrichtung mit Motortreibern, einem Pulsdauermodulator mit einem Spannungs/Frequenzumsetzer und einen Lesespeicher auf. Der Steuerungseinrichtung werden die vom Pulsdauermodulator stammenden Impulserien zugeführt und die Impulsdauer mit Steuerkriterien (Reihenfolge, Zeitdauer) verglichen, die in dem Lesespeicher abgelegt sind. Entsprechend dieser Zuordnungen wird anschließend der Schrittmotor angesteuert.

Der Erfindung liegt die Aufgabe zugrunde, eine Schaltungsanordnung für einen an einer schwankenden Betriebsspannung liegenden Schrittmotor anzugeben, die es ermöglicht, mit einfachen Mitteln die Steuerfrequenz des Schrittmotors an den aktuellen Wert der Betriebsspannung optimal anzupassen.

Diese Aufgabe wird bei einer Schaltungsanordnung der eingangs genannten Art durch die im kennzeichnenden Teil des Patentanspruches 1 genannten Merkmale gelöst. Vorteilhafte Ausführungsformen sind in den Unteransprüchen gekennzeichnet.

Durch die Wahl der Steuerfrequenz in Abhängigkeit von der momentanen Betriebsspannung des Schrittmotors wird eine optimale Anpassung der Steuerfrequenz an die schwankende Betriebsspannung erreicht.

Dazu wird die Frequenz-Spannungskennlinie des zu steuernden Schrittmotors aufgenommen und diese Kennlinie wird durch eine Vielzahl diskreter Werte in Form einer Treppenkurve dargestellt. Die so erhaltene Zuordnung von Steuerfrequenz zur Betriebsspannung des Schrittmotors wird in einem Speicher einer elektronischen Steuerungseinrichtung in Tabellenform abgelegt. Bei Betrieb des Schrittmotors an einer in seiner Amplitude schwankenden Betriebsspannung wird diese Spannung fortwährend gemessen, mit Hilfe eines Analog/Digital-Wandlers in ein digitales Signal umgeformt und einer Zentraleinheit der elektronischen Steuerungseinrichtung weitergegeben. Diese Zentraleinheit benützt dieses digitale Signal als Zeiger für die im Speicher als Tabelle abgelegte, für diesen Wert der Betriebsspannung zugeordnete Steuerfrequenz. Somit wird der Schrittmotor immer mit der größtmöglichen Steuerfrequenz angesteuert, ohne daß der Schrittmotor dabei außer Tritt fällt.

Bei der Verwendung einer solchen Schaltungsanordnung zur Steuerung eines Zeilenmotors in Druckeinrichtungen wird damit die Zeilenvorschubgeschwindigkeit mit einfachen Mitteln erhöht. Dies wirkt sich insbesondere dann vorteilhaft aus, wenn das zu bedruckende Papier nicht Zeile für Zeile vollgeschrieben wird, sondern große Abstände zwischen den einzelnen Abschnitten des Textes auftreten.

Ein weiterer Vorteil dieser Schaltungsanordnung besteht darin, daß diese optimale Ansteuerung des Schrittmotors ohne merklichen Mehraufwand ermöglicht wird, da außer einem Spannungsteiler und einem Motortreiber alle Funktionen in einem Baustein, nämlich der elektronischen Steuerungseinrichtung bereits enthalten sind.

Ein Ausführungsbeispiel der Erfindung ist in der Zeichnung dargestellt und wird im folgenden näher beschrieben. Es zeigen

Fig. 1 das Blockschaltbild der Schaltungsanordnung,

Fig. 2 die Frequenz-Spannungs-Kennlinien verschiedener Schrittmotoren.

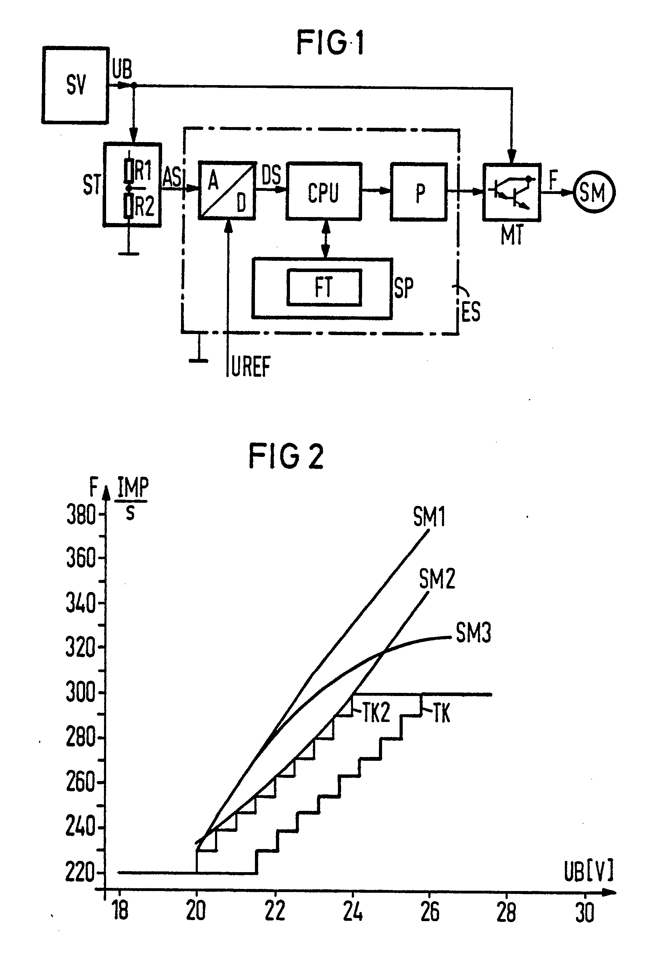

Eine in der Fig. 1 dargestellte Stromversorgung SV liefert für einen Schrittmotor SM eine in ihrer Amplitude schwankende Betriebspannung UB, die mit Hilfe eines Spannungsteilers ST im Verhältnis 11:1 herabgesetzt wird. Das analoge Signal AS wird einem Analogeingang eines in einer elektronischen Steuerungseinrichtung ES enthaltenen Analog/Digital-Wandlers AD zugeführt. Der A/D-Wandler AD setzt das analoge Signal AS, das der Betriebsspannung UB proportional ist, in ein digitales Signal DS um. Durch diese Digitalisierung wird der analoge Momentanwert der Betriebsspannung UB durch eine Vielzahl digitaler Werte dargestellt. Die Anzahl der Stellen, d.h. die Anzahl der unterscheidbaren Stufen beim Umwandlungsvorgang ist ein Maß für die Genauigkeit der Umwandlung.

Die Ausgangsinformation des A/D-Wandlers wird bei dem verwendeten 8-Bit A/D-Wandler AD in $2^8 =$ 256 Stufen quantisiert und anschließend codiert. Das digitale Signal DS wird an eine Zentraleinheit CPU der elektronischen Steuerungseinrichtung ES weitergegeben und dient als Zeiger für eine in einem Speicher SP in Tabellenform einprogrammierte Spannungs-/Frequenzzuordnung FT. Da der Schrittmotor SM bei größerer Betriebsspannung UB mit einer höheren Steuerfrequenz F angesteuert werden kann, wird die Betriebsspannung UB durch die elektronische Steuerungseinrichtung ES fortlaufend gemessen und die Steuerfrequenz F gemäß der im Speicher SP einprogrammierten Spannungs-frequenztabelle FT mit Hilfe der elektronischen Steuerungseinrichtung ES korrigiert. Die elektronische Steuerungseinrichtung ES ist dabei durch den Baustein NEC μP 7810 realisiert. Damit wird die Drehzahl des Schrittmotors SM an den aktuellen Wert der Betriebsspannung UB angepaßt. Über ein Port P und eine Leistungsstufe, nämlich dem Motortreiber MT werden dem Schrittmotor SM die zum Betrieb nötigen Steuerungsimpulse zugeführt.

Fig. 2 zeigt Frequenz-Spannungs-Kennlinien dreier Grenzwertmotoren SM1 bis SM3, die als Zeilenmotoren für Druckeinrichtungen zum Einsatz gelangen. Aus dem Vergleich dieser Kennlinien folgt, daß der Schrittmotor SM2 bei einem bestimmten Wert der Betriebsspannung UB nur mit einer geringeren Steuerfrequenz F als die beiden anderen Schrittmotoren SM1 und SM3 angesteuert werden kann. Da die erfindungsgemäße Schaltungsanordnung auch für den Motor mit den schlechtesten Kennwerten einwandfrei funktionieren soll, bezieht sich deshalb die einzuprogrammierende Tabelle FT auf den Motor mit den schlechtesten Kennwerten, also den Schrittmotor SM2.

Die Kennwerte (Steuerfrequenz F, Betriebsspannung UB) für den Schrittmotor SM2 sind in den ersten beiden Spalten der Tabelle I eingetragen. Für die Betriebsspannung UB sind dabei in dem Bereich von 20 V bis 25 V die Spannungswerte in Schritten von 0,25 V angegeben und zusätzlich als Treppenkurve TK2 in Fig. 2 eingezeichnet.

Tabelle I:

| F   Impulse/sek. | UB | V | DW (Dez.) |
|---|---|---|---|
| 230 | 20,00 | 21,51 | 100 |
| 236 | 20,25 | 21,78 | 101,4 |
| 239 | 20,50 | 22,05 | 102,6 |
| 243 | 20,75 | 22,32 | 103,9 |
| 247 | 21,00 | 22,59 | 105,1 |
| 250 | 21,25 | 22,85 | 106,4 |
| 254 | 21,50 | 23,12 | 107,7 |
| 258 | 21,75 | 23,39 | 108,9 |
| 263 | 22,00 | 23,66 | 110,2 |
| 267 | 22,25 | 23,93 | 111,4 |
| 271 | 22,50 | 24,20 | 112,7 |
| 276 | 22,75 | 24,47 | 113,9 |
| 280 | 23,00 | 24,74 | 115,2 |
| 285 | 23,25 | 25,01 | 116,4 |
| 290 | 23,50 | 25,27 | 117,7 |
| 294 | 23,75 | 25,54 | 118,9 |
| 300 | 24,00 | 25,81 | 120,2 |

Wegen der vorhandenen Toleranzen der verschiedenen Komponenten der Schaltungsanordnung muß ein Sicherheitsabstand eingehalten werden, d.h. die für einen bestimmten Wert der Betriebsspannung UB nach Fig. 2 maximal mögliche Steuerfrequenz F muß reduziert werden.

Die Toleranz des verwendeten A/D-Wandlers AD läßt sich angeben zu

$\pm$ 0,4% $\pm$ 1/2 LSB,

wobei LSB das Least Significant Bit darstellt.

Für die Referenzspannung gilt eine Genauigkeit von

UREF = 5V $\pm$ 5% .

Die Toleranz TSP des Spannungsteilers ST ist abhängig vom Teilverhältnis der Widerstände (im Ausführungsbeispiel 11:1) und der Toleranz der Widerstände R1 und R2 und ergibt sich zu

TSP = + 1,8% .

Berücksichtigt man diese Toleranzen, so erhält man nach der bekannten mathematischen Gesetzen der Fehlerrechnung einen Umrechnungsfaktor

$$UB_3 = UB_2 \cdot \frac{1 + 0,056}{1 - 0,018} ,$$

mit dem die Herte Für die Betriebsspannung aus der 2. Spalte der Tabelle 1 multipliziert werden.

Für den Bereich, in dem die Steuerfrequenz F den Werten der Betriebsspannung UB angepaßt werden soll, beträgt die Änderung der Betriebsspannung UB am Eingang des Analog-Digital-Wandlers

$$AD \frac{(24 - 20) \, V}{11} = 364 \, mV.$$

Bei den 256 Stufen des Analog/Digital-Wandlers AD und einer maximalen Referenzspannung $U_{ref}$ für den AnalogDigital-Wandler AD von 5.25 V beträgt die Auflösung

4

$$\frac{5{,}25\ V}{256\ \text{Stufen}} = 20{,}5\ mV\ \text{pro Stufe.}$$

Es ergeben sich somit 364 mV/20,5 mV / Stufe = 17 mögliche Stufen, d.h. 17 mögliche Tabellenwerte. Die Anzahl der zu programmierenden Tabellenwerte wird jedoch auf 10 festgesetzt, da diese Teilung ausreichend ist.

Aufgrund der oben angeführten Toleranzen werden den Werten der Steuerfrequenz F aus der Tabelle 1 größere Werte der Betriebsspannungen UB zugeordnet, was sich in Fig. 2 als Parallelverschiebung der Treppenkurve TK2 in Richtung zu höheren Betriebsspannungen UB auswirkt. Diese in Fig. 2 als Treppenkurve TK dargestellte Zuordnung der Steuerfrequenz F zur Betriebsspannung US ist in der dritten Spalte der Tabelle 1 angegeben, wobei DW der entsprechende Digitalwert (dezimal dargestellt) zur Betriebsspannung UB ist.

Die Zuordnung der Steuerfrequenz F zum ermittelten 8-Bit-Wert, die im Speicher in Form einer Frequenztabelle FT abgelegt sind, zeigt Tabelle II. Der zur Betriebsspannung UB zugeordnete digitale Wert DW ist dabei im Hexa-Dezimal-Zahlensystem HEX angegeben.

## Tabelle II:

| F Impulse / sek. | DW (HEX) |
|---|---|
| bis 220 | 63 |
| 230 | 64 |
| 239 | 67 |
| 247 | 68 |
| 254 | 6C |
| 263 | 6E |
| 271 | 71 |
| 280 | 73 |
| 290 | 76 |
| ab 300 | 78 |

## Ansprüche

1. Schaltungsanordnung für einen Schrittmotor (SM), der von einer in der Amplitude schwankenden Betriebsspannung (UB) gespeist und mit Hilfe einer elektronischen Steuereinrichtung <(ES) mit einer Steuerfrequenz> (F) beaufschlagt ist,
dadurch gekennzeichnet, des
   - die schwankende Betriebsspannung (UB) als analoges Signal (AS) erfaßt und mit Hilfe eines in der elektronischen Steuerungseinrichtung (ES) enthaltenen Analog/Digital-Wandlers (AD) in ein digitales Signal (DS) umgewandelt wird,
   - die elektronische Steuereinrichtung (ES) einer Speicher (SP) zum Speichern der den einzelnen digitalen Werten der Betriebsspannung (UB) zugeordneten, maximal möglichen Steuerfrequenzen (F) für die Ansteuerung des Schrittmotors (SM) enthält,
   - in Abhängigkeit des momentanen, ermittelten digitalen Wertes (digitales Signal DS) der Betriebsspannung UB die zugehörige maximal mögliche Steuerfrequenz (F) aus dem Speicher (SP) ausgewählt und der Schrittmotor (SM) mit dieser Steuerfrequenz (F) angesteuert wird.

2. Schaltungsanordnung nach Anspruch 1,

EP 0 234 264 B1

**dadurch gekennzeichnet,**
daß der Schrittmotor(SM)als Zeilenmotor in Druckeinrichtungen der Büro- und Datentechnik dient.

## Claims

1. Circuit arrangement for a stepping motor (SM) which is fed by an operating voltage (UB) which fluctuates in amplitude and is controlled with the aid of an electronic control device (ES) by a control frequency (F), characterised in that
   - the fluctuating operating voltage (UB) is recorded as an analog signal (AS) and is converted into a digital signal (DS) with the aid of an analog/digital converter (AD) contained in the electronic control device (ES),
   - the electronic control device (ES) contains a memory (SP) for storing the maximum possible control frequencies (F), assigned to the individual digital values of the operating voltage (UB), for controlling the stepping motor (SM),
   - as a function of the instantaneous, calculated digital value (digital signal DS) of the operating voltage UB, the associated maximum possible control frequency (F) is selected from the memory (SP) and the stepping motor (SM) is controlled with this control frequency (F).

2. Circuit arrangement according to Claim 1, characterised in that the stepping motor (SM) is used as a line motor in printing devices of office and data systems.

## Revendications

1. Montage pour un moteur pas-à-pas (SM), qui est alimenté par une tension de service (UB), dont l'amplitude varie, et est chargé par un dispositif de commande électronique (ES) à fréquence de commande (F),
   caractérisé par le fait que
   - la tension de service variable (UB) est détectée sous la forme d'un signal analogique (AS) et est convertie en un signal numérique (DS) à l'aide d'un convertisseur analogique/numérique (AD) contenu dans le dispositif de commande électronique (ES),
   - le dispositif de commande électronique (ES) comporte une mémoire (SP) servant à mémoriser les fréquences maximales possibles de commande (F), associées aux différentes valeurs numériques de la tension de service (UB), pour la commande du moteur pas-à-pas (SM),
   - en fonction de la valeur numérique instantanée déterminée (signal numérique DS) de la tension de service (UB), la fréquence maximale possible associée de commande (F) est sélectionnée à partir de la mémoire (SP) et le moteur pas-à-pas (SP) est commandé par cette fréquence de commande (F).

2. Montage suivant la revendication 1, caractérisé par le fait que le moteur pas-à-pas (SM) est utilisé comme moteur d'avance ligne par ligne dans des dispositifs d'impression dans le domaine de la bureautique et de la technique de transmission des données.

EP 0 234 264 B1

# FIG·1

# FIG 2

7